# FASCICULE DE BREVET EUROPEEN

(11) **EP 1 015 303 B1**
(45) Date de publication et mention de la délivrance du brevet: **09.01.2002**
(21) Numéro de dépôt: 98943941.9
(22) Date de dépôt: 08.09.1998
(51) Int. Cl.: B62M 3/08

(54) **PEDALE DE BICYCLETTE A FIXATION DE SECURITE, ET DISPOSITIF DE FIXATION D'UNE CHAUSSURE SUR LA PEDALE**
VORRICHTUNG ZUR BEFESTIGUNG EINES SCHUHES AN EINEM FAHRRADPEDAL UND FAHRRADPEDAL
BICYCLE PEDAL WITH SECURE FIXING ELEMENT, AND DEVICE FOR FIXING A SHOE ON THE PEDAL

(30) Priorité: 18.09.1997 FR 9711620
(43) Date de publication de la demande: 05.07.2000
(73) Titulaire: Beyl, Suzanne, 58000 Nevers (FR)
(72) Inventeur: Beyl, Suzanne, 58000 Nevers (FR)
(74) Mandataire: Michardière, Bernard
(86) Numéro de dépôt international: FR9801915
(87) Numéro de publication internationale: WO9914107

(56) Documents cités:
- EP-A- 0 572 291
- EP-A- 0 576 042
- FR-A- 2 574 743
- FR-A- 2 638 700
- FR-A- 2 699 492

## Description

L'invention est relative à une pédale de bicyclette à fixation de sécurité pour une chaussure équipée sous la semelle d'une cale munie d'un bec dirigé vers l'avant, la pédale étant montée rotative autour d'un axe.

La pédale concernée par l'invention est du genre du genre de celles qui comprennent :
- un moyen de retenue s'étendant transversalement en arrière de l'axe de rotation de la pédale, ce moyen de retenue étant situé à l'avant d'une ouverture dans laquelle peut s'engager la cale de la chaussure, et étant propre à coopérer avec le bec de la cale pour assurer une retenue de la cale et de la chaussure vers le haut et vers l'avant ;
- un organe de maintien, situé à l'arrière de la pédale et monté mobile suivant la direction longitudinale, propre à être appliqué par des moyens de rappel élastiques contre l'arrière de la cale pour la pousser contre le moyen de retenue et assurer l'accrochage .

Une pédale de ce type est connu, notamment d'après FR-B-2 564 414, FR-B-2 574 743 et EP-B-0 169 080.

Une telle pédale accroît la sécurité du cycliste en permettant un décrochage rapide de la chaussure, notamment pour prévenir une chute, par un mouvement de torsion du pied. Parmi d'autres avantages, il convient de souligner que la semelle de la chaussure appuie directement sur la pédale, à faible distance de l'axe géométrique de rotation , sans en être écartée par la cale qui vient se loger dans une ouverture située à l'arrière de la zone d'appui ; l'efficacité du pédalage s'en trouve améliorée.

Bien que ce dispositif de fixation fonctionne de manière tout à fait satisfaisante, le "chaussage", c'est-à-dire l'accrochage de la cale et de la chaussure à la pédale, n'est pas aussi facile que souhaité.

L'invention a pour but, surtout, de fournir une pédale de bicyclette à fixation de sécurité du genre en question qui, tout en conservant les avantages rappelés ci-dessus, permet un "chaussage", au sens défini précédemment, plus facile et plus rapide à réaliser. Il est souhaitable également que la pédale soit d'une construction simple, fiable et robuste.

Selon l'invention, une pédale de bicyclette à fixation de sécurité, du genre défini précédemment, est caractérisée par le fait que le moyen de retenue prévu sur la pédale est monté de manière à pouvoir être déplacé vers l'avant, à l'encontre de moyens de rappel élastiques, en particulier sous l'action d'une poussée exercée par la cale, et à revenir en position d'accrochage du bec sous l'action des moyens de rappel élastiques.

De préférence, le moyen de retenue est constitué par une barrette parallèle à l'axe géométrique de la pédale et pouvant être déplacée parallèlement à elle-même.

Avantageusement, la barrette est supportée par deux bras orientés radialement, pouvant pivoter autour d'un axe parallèle à l'axe géométrique de rotation de la pédale, l'ensemble de la barrette et des bras étant soumis à l'action d'au moins un ressort de torsion.

La barrette et les bras peuvent former une seule pièce recourbée en U, en particulier en fil d'acier, les extrémités des bras éloignées de la barrette étant enroulées en hélice, en sens opposé, de chaque côté pour former un ressort de torsion. Les enroulements des ressorts de torsion sont sensiblement coaxiaux, parallèles à l'axe de rotation de la pédale, et une tige est enfilée dans ces enroulements pour servir de support aux ressorts et à la barrette, cette tige étant engagée dans des trous prévus respectivement de chaque côté de la pédale.

Avantageusement, l'organe de maintien et le moyen de retenue ont une configuration géométrique sensiblement symétrique par rapport à un plan parallèle à l'axe de rotation de la pédale et perpendiculaire au plan moyen de cette pédale. L'organe de maintien est également formé par une barrette avec des bras , constituant une seule pièce recourbée en U; les extrémités des bras éloignées de la barrette sont enroulées en hélice, en sens inverse des enroulements sensiblement symétriques du moyen de retenue.

Les ressorts de torsion du moyen de retenue ont tendance à le maintenir écarté du bord arrière d'un plateau de la pédale recouvrant l'axe de rotation, tandis que les ressorts de torsion de l'organe de maintien rappellent la barrette de maintien en direction de ce bord arrière du plateau de la pédale.

Les deux barrettes parallèles définissent entre elles une fenêtre dont la largeur peut d'abord augmenter, sous une poussée sensiblement verticale de la cale munie de bords inclinés appuyant contre les barrettes, pour permettre le passage de la cale et de son bec, puis ensuite diminuer avec accrochage du bec de cale par recul de la barrette formant moyen de retenue.

De préférence, les extrémités des ressorts de torsion éloignées des bras se prolongent par une extension radiale venant en butée sous une traverse prévue en partie basse arrière de la pédale.

Avantageusement, une même traverse avec deux bords inférieurs opposés inclinés, sert de butée aux extensions radiales des bras du moyen de retenue et de l' organe de maintien.

L'invention est également relative à un dispositif de fixation d'une chaussure sur une pédale de bicyclette telle que définie précédemment, formé par la combinaison de la pédale et d'au moins une cale principale propre à être fixée sous la semelle d'une chaussure et à coopérer avec le moyen de retenue et l'organe de maintien de la pédale.

L'invention consiste, mises à part les dispositions exposées ci-dessus, en un certain nombre d'autres dispositions dont il sera plus explicitement question ci-après à propos d'un exemple de réalisation particulier décrit avec référence aux dessins ci-annexés, mais qui n'est nullement limitatif.

La Figure 1, de ces dessins, est une coupe schématique longitudinale d'une pédale conforme à l'invention, et d'une semelle de chaussure avec cale principale pour accrochage à la pédale et cale supplémentaire, en début d'opération de chaussage.

La Figure 2 montre, semblablement à la Figure 1, la pédale et la semelle de chaussure au cours du chaussage, le bec de la cale étant en cours de franchissement du moyen de retenue.

La Figure 3 montre, semblablement à la Figure 1, la pédale et la semelle de chaussure en position chaussée.

La Figure 4, enfin, est une vue de dessus de la pédale selon l'invention.

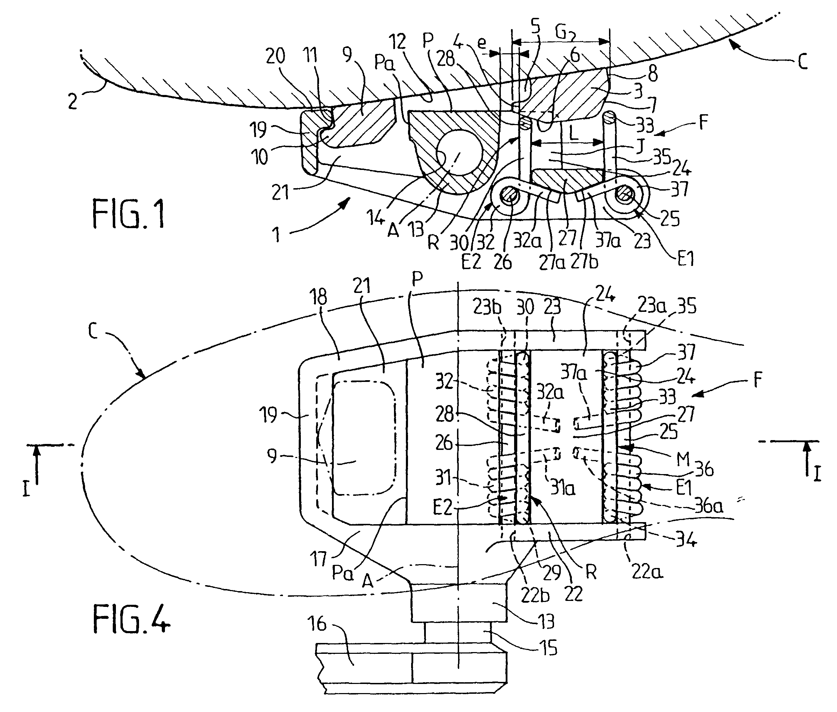

En se reportant aux dessins, notamment aux Figures 1 et 4, on peut voir une pédale de bicyclette 1, montée rotative autour d'un axe géométrique A , avec dispositif de fixation de sécurité F d'une chaussure C sur cette pédale 1.

On désignera par "direction transversale" une direction parallèle à l'axe A ; par "direction longitudinale", une direction orthogonale à l'axe A et parallèle au plan moyen de la pédale. L'"avant" de la pédale désigne la partie la plus proche de la pointe d'une chaussure fixée à cette pédale. L' "arrière" de la pédale désigne l'autre partie extrême de la pédale.

Seule la semelle 2 de la chaussure C est représentée schématiquement, avec une cale principale 3 solidaire de la semelle 2. La cale 3 peut être réalisée en métal ou en matière plastique; elle est fixée à la semelle C de manière démontable par des vis (non représentées), avec une possibilité de réglage au moins dans la direction longitudinale.

La cale 3 est située en arrière de la partie de la semelle correspondant à la plus grande largeur du pied. La cale 3 est munie d'un bec 4 dirigé vers l'avant, et écarté de la surface inférieure de la semelle 2 de manière à déterminer un logement 5 ouvert vers l'avant. La surface inférieure 6 du bec 4 est inclinée de haut en bas de l'avant vers l'arrière. La face arrière de la cale 3 comporte, en partie basse, une surface 7 inclinée en sens contraire de la surface 6, et en partie haute une surface 8 sensiblement orthogonale à la zone voisine de la semelle 2.

Une cale supplémentaire 9, de plus petites dimensions, est prévue en avant de la cale 3 et est fixée à la semelle 2 de manière démontable et réglable par des vis (non représentées). La cale supplémentaire 9 comporte également un bec 10 en saillie vers l'avant définissant, avec la semelle 2, un logement 11 ouvert vers l'avant.

L'espace 12 de la semelle 2 compris entre les deux cales 3 et 9 est propre à appuyer directement sur un plateau P de la pédale situé au droit de l'axe de rotation. L'articulation du métatarse du pied de l'utilisateur se trouve dans la zone de l'espace 12 de la semelle.

La pédale 1 se compose d'un moyeu 13 comportant un alésage 14 dans lequel est engagé un axe matériel 15 (Fig.4) fixé sur la manivelle 16 et sur lequel la pédale 1 est montée libre en rotation.

Lorsque la pédale 1 est horizontale, comme illustré sur les Figs. 1 et 4, la surface supérieure du moyeu 13, formée par le plateau P, est elle-même horizontale . La dimension du plateau P est réduite suivant la direction longitudinale de la pédale.

Le bord transversal avant Pa du plateau P est solidaire, respectivement à chacune de ses extrémités, de deux branches 17, 18 faisant saillie vers l'avant et reliées entre elles par un bord transversal avant 19. Ce bord 19 a été représenté rectiligne, mais il peut avoir une forme différente, en particulier convexe vers l'avant. La partie supérieure du bord 19 présente un retour 20 vers l'arrière, propre à s'engager dans le logement 11 défini par la cale supplémentaire 9. Une ouverture 21 de forme sensiblement trapézoïdale est délimitée par les deux branches 17, 18, le bord avant du plateau P et le bord transversal 19. La cale supplémentaire 9 vient s'engager dans cette ouverture 21.

Le plateau P est situé sensiblement dans le même plan que la partie supérieure du bord 19.

Le moyeu 13 est prolongé vers l'arrière, à chaque extrémité transversale du plateau P, par une branche longitudinale 22, 23. Une ouverture 24 est ainsi délimitée par les branches 22, 23, en arrière du plateau P, pour recevoir la cale 3.

Les branches 22, 23 s'étendent au niveau inférieur du moyeu 13. Une joue latérale J est prévue de chaque côté longitudinal de la pédale pour consolider la liaison des branches 22, 23 avec le moyeu 13.

Les banches 22, 23 comportent, vers leur extrémité arrière, un trou 22a, 23a servant de palier pour recevoir les extrémités d'une tige 25.

Les branches 22 et 23 comportent également, à proximité de la face arrière du moyeu 13, un trou 22b, 23b pour servir de palier à une deuxième tige transversale 26 parallèle à l'axe géométrique A de rotation de la pédale.

Les branches 22, 23 sont reliées dans une zone comprise entre les trous 22a, 22b et 23a, 23b, par une traverse 27 dont la surface inférieure a une section en forme de V ouvert, comme visible sur la Fig. 1. La face inférieure 27a, tournée vers l'avant, est inclinée de haut en bas vers l'arrière, tandis que la face arrière 27b est inclinée en sens contraire.

La pédale 1 comporte un moyen de retenue R s'étendant transversalement en arrière de l'axe géométrique A. Ce moyen de retenue R est situé à l'avant de l'ouverture 24 et est propre à coopérer avec le bec 4 de la cale 3 pour retenir vers l'avant et vers le haut la chaussure C.

La pédale 1 comporte également un organe de maintien M monté mobile suivant la direction longitudinale et propre à être appliqué par des moyens de rappel élastiques E1 contre l'arrière 8 de la cale 3 pour la pousser contre le moyen de retenue R et assurer l'accrochage cale/pédale.

Le moyen de retenue R est monté sur la pédale 1 de manière à pouvoir être déplacé longitudinalement vers l'avant, à l'encontre de moyens de rappel élastiques E2.

Le moyen de retenue R est avantageusement constitué par une barrette 28 parallèle à l'axe géométrique A de la pédale et pouvant être déplacée parallèlement à elle-même.

La barrette 28 est supportée par deux bras pivotants 29, 30 orientés radialement, solidaires des extrémités de la barrette 28.

Avantageusement, la barrette 28 et les bras 29, 30 forment une seule pièce en fil d'acier recourbée en U, les bras 29, 30 constituant les branches parallèles du U tandis que la barrette 28 correspond à la base allongée de ce U.

Les extrémités des bras 29, 30 éloignées de la barrette sont enroulées en hélice, en sens contraire, pour former, de chaque côté, un ressort de torsion 31, 32 dont les spires sont dirigées vers l'intérieur du U. Les ressorts 31, 32 sont coaxiaux et forment respectivement deux manchons dans lesquels est engagée la tige 26 dont les extrémités sont portées par les branches 22, 23.

Les extrémités des ressorts de torsion 31, 32 éloignées des bras 29, 30 se prolongent par une extension radiale 31a, 32a venant en butée sous la face 27a de la traverse 27.

Les ressorts 31, 32 sont prévus pour exercer un rappel de la barrette 28 dans le sens d'horloge selon la Fig. 1 et pour s'opposer élastiquement à un déplacement vers l'avant (c'est à dire vers la gauche de la Fig.1) de la barrette 28.

La position de repos de l'organe de retenue R est illustrée sur la Fig. 1. Lorsque la pédale 1 est horizontale, les bras 29, 30 en position de repos sont sensiblement verticaux et la barrette 28 est écartée d'une distance e du bord arrière du plateau P.

L'organe de maintien M est également constitué par une seule pièce en fil d'acier recourbé en U comprenant une barrette 33, parallèle à la barrette 28 et située en arrière de celle-ci. Cette barrette 33 est solidaire, à chacune de ses extrémités, de bras radiaux 34, 35 se prolongeant, à leurs extrémités éloignées de la barrette 39, par des enroulements 36, 37 formant ressort de torsion. Chaque enroulement 36, 37, à son extrémité éloignée des bras 34, 35, se prolonge par une extension radiale 36a, 37a qui vient en butée sous la face 27b de la traverse 27. Les enroulements 36, 37 sont effectués en sens opposé entre eux. L'enroulement 36 est en outre en sens opposé par rapport à l'enroulement 31 situé du même côté. Il en est de même pour les enroulements 37 et 32. Ainsi, les moyens E1 formés par les ressorts 36 et 37 rappellent élastiquement la barrette 33 dans le sens contraire d'horloge, selon la Fig. 1. Dans la position de repos, illustrée sur cette Fig. 1, les bras 34, 35 sont sensiblement verticaux lorsque la pédale est horizontale.

La configuration géométrique de la barrette 38, des bras 34,35 et des enroulements 36, 37 est sensiblement symétrique de celle de la barrette 28, des bras 29,30 et des enroulements 31,32, par rapport au plan transversal médiateur de la traverse 27.

La distance L entre les bords intérieurs des barrettes 32, 33 au repos est inférieure à la distance G entre l'extrémité avant du bec 4 et la face arrière 8 de la cale 3.

Les deux enroulements 36, 37 coaxiaux sont traversés par la tige 25 supportée à ses extrémités par les branches 22 et 23.

Ceci étant, le fonctionnement de la pédale à fixation de sécurité selon l'invention, notamment en ce qui concerne le "chaussage", est le suivant.

En vue du chaussage, le cycliste place sa chaussure C dans la position illustrée sur la Fig. 1, en engageant la cale supplémentaire 9 dans l'ouverture 21, ce qui positionne la surface inférieure inclinée 6, de la cale 3, au-dessus de la barrette 28.

La cale supplémentaire 9 vient en butée contre le retour 20 du bord avant de la pédale, qui constitue un point d'appui pour l'opération de chaussage.

Le cycliste exerce sur la cale 3 une poussée dirigée vers le bas.

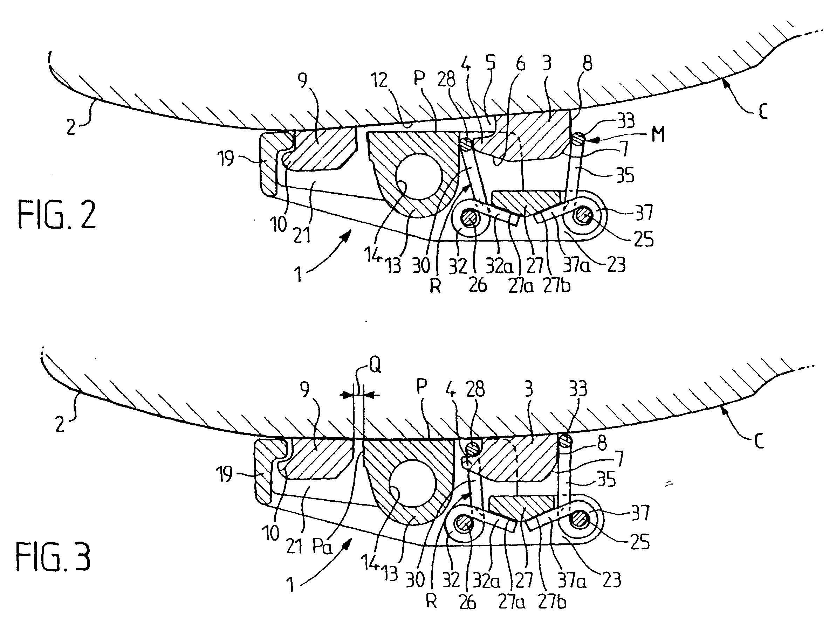

La face inclinée 6 exerce une pression sur la barrette 28 qui se déplace vers l'avant, à l'encontre de l'action des ressorts 31, 32, comme illustré Fig.2 . La face arrière 7 de la cale 3 agit en sens contraire contre la barrette 33.

La distance entre les barrettes 28 et 33 augmente suffisamment pour laisser le passage du bec 4 de la cale vers le bas.

Dès que le bec 4 a dépassé vers le bas la barrette 28, celle-ci, rappelée par les ressorts 31, 32 dans le sens d'horloge, recule et vient s'engager dans le logement 5 (Fig.3) . Simultanément, la barrette 33 est venue en appui contre la face arrière 8 de la cale 3.

La chaussure C est alors accrochée à la pédale 1 et est retenue par la barrette 28 vers le haut et vers l'avant.

L'opération de "chaussage" est grandement facilitée par cette possibilité d'effacement de la barrette de retenue 28. La résistance exercée par les ressorts 31, 32 peut être réglée initialement à la valeur la mieux adaptée.

L'engagement de la barrette 28 dans le logement 5 s'effectue de lui-même, sans que la chaussure C ait à effectuer un mouvement de recul, contraire au sens de la poussée du pied, suivi d'un mouvement vers l'avant.

Les ressorts 36, 37 agissant sur la barrette 33 sont peu sollicités lors du chaussage, qui fait intervenir essentiellement la barrette 28. Il est donc possible de prévoir des ressorts 36, 37 moins souples avec un nombre de spires réduit.

Le déchaussage, c'est-à-dire la séparation de la chaussure C relativement à la pédale 1, s'effectue par un simple mouvement de torsion du pied du cycliste relativement à la pédale, dans le sens qui écarte le talon de la bicyclette. Ce mouvement de torsion provoque l'écartement des barrettes 28 et 33 et le décrochage de la cale 3 qui agit à la manière d'une came par ses faces avant et arrière.

Bien que la description ait porté essentiellement sur un moyen de retenue formé par une barrette 28 supportée par des bras pivotants, il est clair que le moyen de retenue pourrait être constitué par une barrette ou une plaquette coulissante dans un plan parallèle au plateau P et rappelée élastiquement, ou par tout autre moyen équivalent.

## Revendications

1. Pédale de bicyclette à fixation de sécurité pour une chaussure équipée sous la semelle d'une cale (3) munie d'un bec (4) dirigé vers l'avant, la pédale montée rotative autour d'un axe (A) comprenant :
- un moyen de retenue (R) s'étendant transversalement en arrière de l'axe de rotation (A) de la pédale, ce moyen de retenue (R) étant situé à l'avant d'une ouverture (24) dans laquelle peut s'engager la cale (3) de la chaussure, et étant propre à coopérer avec le bec (4) de la cale pour assurer une retenue de la cale et de la chaussure vers le haut et vers l'avant ;
- un organe de maintien (M), situé à l'arrière de la pédale et monté mobile suivant la direction longitudinale, propre à être appliqué par des premiers moyens de rappel élastiques (E1) contre l'arrière (8) de la cale (3) pour la pousser contre le moyen de retenue (R) et assurer l'accrochage ,
**caractérisée par le fait que** le moyen de retenue (R) prévu sur la pédale est monté de manière à pouvoir être déplacé vers l'avant, à l'encontre de deuxièmes moyens de rappel élastiques (E2), en particulier sous l'action d'une poussée exercée par la cale (3), et à revenir en position d'accrochage du bec (4) sous l'action des deuxièmes moyens de rappel élastiques (E2).

2. Pédale de bicyclette selon la revendication 1, **caractérisée par le fait que** le moyen de retenue (R) est constitué par une barrette (28) parallèle à l'axe géométrique (A) de la pédale et pouvant être déplacée parallèlement à elle-même.

3. Pédale de bicyclette selon la revendication 2, **caractérisée par le fait que** la barrette (28) est supportée par deux bras (29,30) orientés radialement, pouvant pivoter autour d'un axe parallèle à l'axe géométrique de rotation (A) de la pédale, l'ensemble de la barrette (28) et des bras (29,30) étant soumis à l'action d'au moins un ressort de torsion.

4. Pédale de bicyclette selon la revendication 2 ou 3, **caractérisée par le fait que** la barrette (28) forme avec des bras (29,30) une seule pièce recourbée en U, en particulier en fil d'acier, les extrémités des bras éloignées de la barrette étant enroulées en hélice, en sens opposé, de chaque côté pour former un ressort de torsion (31,32).

5. Pédale de bicyclette selon la revendication 4, **caractérisée par le fait que** les enroulements (31,32) des ressorts de torsion sont sensiblement coaxiaux, parallèles à l'axe de rotation (A) de la pédale, et une tige (26) est enfilée dans ces enroulements pour servir de support aux ressorts et à la barrette, cette tige étant engagée dans des trous (22b,23b) prévus respectivement de chaque côté de la pédale.

6. Pédale de bicyclette selon la revendication 4 ou 5, **caractérisée par le fait que** l'organe de maintien (M) et le moyen de retenue (R) ont une configuration géométrique sensiblement symétrique par rapport à un plan parallèle à l'axe de rotation de la pédale et perpendiculaire au plan moyen de cette pédale.

7. Pédale de bicyclette selon la revendication 6, **caractérisée par le fait que** l'organe de maintien (M) est également formé par une barrette (33) avec des bras (34,35) , constituant une seule pièce recourbée en U, les extrémités des bras (34,35) éloignées de la barrette étant enroulées en hélice (36,37), en sens inverse des enroulements (31,32) sensiblement symétriques du moyen de retenue (R).

8. Pédale de bicyclette selon la revendication 7, **caractérisée par le fait que** les deux barrettes parallèles (28,33) définissent entre elles une fenêtre dont la largeur peut d'abord augmenter, sous une poussée sensiblement verticale de la cale (3) munie de bords inclinés (6,7) appuyant contre les barrettes, pour permettre le passage de la cale et de son bec, puis ensuite diminuer avec accrochage du bec (4) de cale par recul de la barrette (28) formant moyen de retenue.

9. Pédale de bicyclette selon la revendication 7, **caractérisée par le fait que** les extrémités des ressorts de torsion éloignées des bras se prolongent par une extension radiale (31a,32a; 36a,37a) venant en butée sous une même traverse (27) prévue en partie basse arrière de la pédale , cette traverse ayant des bords inférieurs opposés inclinés (27a,27b).

10. Dispositif de fixation d'une chaussure sur une pédale de bicyclette selon l'une des revendications précédentes, **caractérisé par le fait qu'**il est formé par la combinaison de la pédale (1) et d'au moins une cale principale (3) propre à être fixée sous la semelle d'une chaussure et à coopérer avec le moyen de retenue (R) et l'organe de maintien (M) de la pédale.

## Patentansprüche

1. Fahrradpedal mit Sicherheitsbefestigung für einen Schuh, der unter der Sohle einen Keil (3) mit einem nach vorn gerichteten Vorsprung (4) aufweist, wobei das Pedal um eine Achse (A) drehbar montiert ist, mit:
- einer Rückhalteeinrichtung (R), die sich hinter der Drehachse (A) des Pedals in Querrichtung erstreckt, wobei die Rückhalteeinrichtung (R) vor einer Öffnung (24) angeordnet ist, in welche der Keil (3) des Schuhs eingreifen kann, und die zum Zusammenwirken mit dem Vorsprung (4) des Keils geeignet ist, um ein Zurückhalten des Keils und des Schuhs nach oben und nach vorn zu gewährleisten;
- einem hinter dem Pedal angeordneten und in Längsrichtung bewegbaren Halteorgan (M), das durch eine erste elastische Rückstelleinrichtung (E1) gegen die Rückseite (8) des Keils (3) gedrückt werden kann, um diesen gegen die Rückhalteeinrichtung (R) zu drücken und das Einrasten zu gewährleisten,
**dadurch gekennzeichnet, daß**
- die auf dem Pedal vorgesehene Rückhalteeinrichtung (R) derart montiert ist, daß sie entgegen einer zweiten elastischen Rückstelleinrichtung (E2) insbesondere unter der Wirkung eines durch den Keil (3) ausgeübten Drucks, nach vorn verschiebbar ist und unter Einwirkung der zweiten elastischen Rückstelleinrichtung (E2) in die Einrastposition des Vorsprungs (4) zurückkehrt.

2. Fahrradpedal nach Anspruch 1, **dadurch gekennzeichnet, daß** die Rückhalteeinrichtung (R) durch einen Bügel (28) gebildet ist, der parallel zur geometrischen Achse (A) des Pedals verläuft und parallel zu dieser verschiebbar ist.

3. Fahrradpedal nach Anspruch 2, **dadurch gekennzeichnet, daß** der Bügel (28) von zwei radial ausgerichteten Armen (29, 30) gestützt ist, die um eine zur geometrischen Drehachse (A) des Pedals parallele Achse verschwenkbar sind, wobei die Einheit aus Bügel (28) und Armen (29, 30) unter Einwirkung wenigstens einer Torsionsfeder steht.

4. Fahrradpedal nach Anspruch 2 oder 3, **dadurch gekennzeichnet, daß** der Bügel (28) mit den Armen (29, 30) ein einstückiges U-förmig gebogenes Teil, insbesondere aus Stahldraht, bildet, wobei die dem Bügel abgewandten Enden der Arme zu beiden Seiten in entgegengesetzte Richtungen schraubenlinienförmig gewunden sind, um eine Torsionsfeder (31, 33) zu bilden.

5. Fahrradpedal nach Anspruch 4, **dadurch gekennzeichnet, daß** die Windungen (31, 32) der Torsionsfedern im wesentlichen koaxial sind sowie parallel zur Drehachse (A) des Pedals verlaufen, und eine Stange (26) in diese Wicklungen als Stütze für die Federn und den Bügel eingesetzt ist, wobei die Stange in Löcher (22b, 23b) eingesetzt ist, die in beiden Seiten des Pedals ausgebildet sind.

6. Fahrradpedal nach Anspruch 4 oder 5, **dadurch gekennzeichnet, daß** das Halteorgan (M) und die Rückhalteeinrichtung (R) eine geometrische Konfiguration aufweisen, die im wesentlichen symmetrisch in bezug auf eine zur Drehachse des Pedals parallele und zur Mittelebene dieses Pedals senkrechte Achse verläuft.

7. Fahrradpedal nach Anspruch 6, **dadurch gekennzeichnet, daß** das Halteorgan (M) ebenfalls durch einen Bügel (33) mit Armen (34, 35) gebildet ist, die ein einstückiges U-förmig gebogenes Teil bilden, wobei die dem Bügel (33) abgewandten Enden der Arme (34, 35) in zu den im wesentlichen symmetrischen Wicklungen (31, 32) der Rückhalteeinrichtung (R) entgegengesetzter Richtung schraubenlinienförmig (36, 37) gewickelt sind.

8. Fahrradpedal nach Anspruch 7, **dadurch gekennzeichnet, daß** die beiden parallelen Bügel (28, 33) zwischen einander ein Fenster bilden, dessen Breite unter im wesentlichen vertikalem Druck des gegen die Bügel drückenden Keils (3), der mit schrägen Rändern (6, 7) versehen ist, zunächst zunimmt, um den Durchtritt des Keils und seines Vorsprungs zu ermöglichen, und dessen Breite anschließend mit dem Einrasten des Vorsprungs (4) durch das Zurückstellen des die Rückhalteeinrichtung bildenden Bügels (28) abnimmt.

9. Fahrradpedal nach Anspruch 7, **dadurch gekennzeichnet, daß** die den Armen abgewandten Enden der Torsionsfedern durch eine radiale Verlängerung (31a, 32a; 36a, 37a) verlängert sind, die unter der selben im unteren hinteren Bereich des Pedals vorgesehenen Traversen (27) anliegen, welche entgegengesetzt geneigte untere Ränder (27a, 27b) aufweist.

10. Vorrichtung zum Befestigen eines Schuhs an einem Fahrradpedal nach einem der vorhergehenden Ansprüche, **dadurch gekennzeichnet, daß** sie aus einer Kombination aus dem Pedal (1) und wenigstens einem Hauptkeil (3) besteht, derzum Befestigen unter der Sohle eines Schuhs und zum Zusammenwirken mit der Rückhalteeinrichtung (R) und dem Halteorgan (M) des Pedals geeignet ist.

## Claims

1. Bicycle pedal with safety fixing for a shoe equipped beneath the sole with a cleat (3) furnished with a catch (4) directed forwards, the pedal mounted rotatably about an axis (A) comprising:
- a retaining means (R) running transversely at the rear of the axis of rotation (A) of the pedal, this retaining means (R) being situated in front of an opening (24) in which the cleat (3) of the shoe can engage, and being able to cooperate with the catch (4) of the cleat so as to ensure retention of the cleat and of the shoe upwards and forwards;
- a holding member (M), situated at the rear of the pedal and mounted movably along the longitudinal direction, able to be applied by first elastic return means (E1) against the rear (8) of the cleat (3) so as to thrust it against the retaining means (R) and ensure fastening,
**characterized in that** the retaining means (R) provided on the pedal is mounted in such a way as to be able to be displaced forwards, countering second elastic return means (E2), in particular under the action of a thrust exerted by the cleat (3), and to return to the position of fastening of the catch (4) under the action of the second elastic return means (E2).

2. Bicycle pedal according to Claim 1, **characterized in that** the retaining means (R) consists of a pin (28) parallel to the geometrical axis (A) of the pedal and displaceable parallel to itself.

3. Bicycle pedal according to Claim 2, **characterized in that** the pin (28) is supported by two radially oriented arms (29, 30), capable of pivoting about an axis parallel to the geometrical axis of rotation (A) of the pedal, the assembly of the pin (28) and of the arms (29, 30) being subjected to the action of at least one torsion spring.

4. Bicycle pedal according to Claim 2 or 3, **characterized in that** the pin (28) forms together with the arms (29, 30) a single piece bent into a U, made in particular of steel wire, those ends of the arms which are remote from the pin being wound into a helix, oppositely directed, on each side so as to form a torsion spring (31, 32).

5. Bicycle pedal according to Claim 4, **characterized in that** the windings (31, 32) of the torsion springs are substantially coaxial, parallel to the axis of rotation (A) of the pedal, and a rod (26) is threaded into these windings so as to serve as a support for the springs and for the pin, this rod being engaged in holes (22b, 23b) provided on each side respectively of the pedal.

6. Bicycle pedal according to Claim 4 or 5, **characterized in that** the holding member (M) and the retaining means (R) have a substantially symmetric geometrical configuration with respect to a plane parallel to the axis of rotation of the pedal and perpendicular to the midplane of this pedal.

7. Bicycle pedal according to Claim 6, **characterized in that** the holding member (M) is likewise formed by a pin (33) with arms (34, 35), constituting a single piece bent into a U, those ends of the arms (34, 35) remote from the pin being wound into a helix (36, 37), in the reverse direction to the substantially symmetric windings (31, 32) of the retaining means (R).

8. Bicycle pedal according to Claim 7, **characterized in that** the two parallel pins (28, 33) define therebetween a window whose width can firstly increase, under a substantially vertical thrust of the cleat (3) furnished with inclined edges (6, 7) bearing against the pins, so as to allow the passage of the cleat and of its catch, then thereafter decrease with fastening of the cleat catch (4) by recoil of the pin (28) forming retaining means.

9. Bicycle pedal according to Claim 7, **characterized in that** those ends of the torsion springs remote from the arms are extended by a radial extension (31a, 32a; 36a, 37a) coming into abutment beneath one and the same crossbar (27) provided at the rear bottom part of the pedal, this crossbar having inclined opposite lower edges (27a, 27b).

10. Device for fixing a shoe to a bicycle pedal according to one of the preceding claims, **characterized in that** it is formed by the combination of the pedal (1) and of at least one main cleat (3) able to be fixed beneath the sole of a shoe and to cooperate with the retaining means (R) and the holding member (M) of the pedal.
